# EUROPEAN PATENT APPLICATION

(11) **EP 1 956 238 A1**
(43) Date of publication of application: **13.08.2008**
(21) Application number: 06791000.0
(22) Date of filing: 14.09.2006
(51) Int. Cl.: F03G 3/00

(54) **GENERATOR DEVICE WITH BOTH DRIVING UNITS**

(30) Priority: 16.11.2005 CN 200510125211
(71) Applicant: Su, Weixing, Hebi, Henan 458030 (CN)
(72) Inventor: Su, Weixing, Hebi, Henan 458030 (CN)
(74) Representative: Arth, Hans-Lothar
(86) International application number: PCT/CN2006/002397
(87) International publication number: WO 2007/056917

(57) **Abstract**

A generator device with both driving units is provided, in which there are a support bracket (10), a frame (a) mounted thereon, on which a generator (1), a control system, a direction-adjustable system, a direction-adjustable motor (6) and a protective system (5) are provided; transmission mechanism (c, c', 4, 4'), hydraulic pressure controlling brake mechanisms (2,2'), speed change mechanisms (3,3') and rotating mechanisms (7.7) are separately provided at both ends of the generator (1); they are sequentially assembled with parts and electrical elements by connecting fittings according to demands.

## Description

### TECHNICAL FIELD

The invention belongs to power generating equipment, and it relies on the driving of two drives which could perform relative rotation (movement).

### BACKGROUND OF THE INVENTION

The power is transformed from energy, however, the physical resources will end eventually with the stepwise exploitation. The survival of human being can not be separated from energy, the utilization of renewable resources is the only way to save physical energy and achieve the sustainable development, which could help logically utilize the physical energy. The development and utilization of renewable and clean wind energy resources could reduce environmental pollution and protect ecological balances. The governments around the world pay more attention to solving the difficulty for the survival of human being. Currently, the generators used around the world mainly consist of stator, shaft, end shield, outer cover, shaft-related fittings and fasteners, the foreign impetus, through relevant fittings, will transmit the kinetic energy to the shaft to drive the rotators to rotate for power generation. The transmission efficiency and work of the generator shall depend on the rotation speed of the generator and the conversion efficiency utilized by the generator, however, the friction existing in the energy conversion restricts the efficient exertion and utilization of latent energy.

In order to improve the energy utilization of the generator and overcome the insufficiency that the generator fails to efficiently exert the latent energy, convert into electric energy and to provide much power to the users, the invention provides a set of "Generator device with both driving units", which utilizes the principles of mechanical energy and electric energy scientifically and skillfully so as to enable the generating equipment to more efficiently convert kinetic energy into electric energy, thus, it could provide more adequate electric energy and reduce the energy consumption.

### SUMMARY OF THE INVENTION

The technical proposals that the invention adopts to solve technical difficulties are: its bracing frame is assembled with a main frame where it is installed with generator, direction-adjustable system, protective system, control system device, hydraulic control devices, transmission mechanism and rotator. Two ends of the generator are designed respectively with transmission mechanism, speed change mechanism, hydraulic control, braking system and shafts assembled for the driving wheel, the system devices, frames and fittings are assembled on the frame through different connecting pieces under sequences. It is installed with outer cover, the shafts on both sides of the cover outside shall extend outward in different directions, and be designed with wheel hub, driving wheel and fairwater. The generator is installed with two rotating devices inside and outside the casing, the external casing is installed with iron core of wire winding inside, the inner ring of the iron core inside are distributed with serial slots where the wire winding is inlaid, the winding shall be connected as required with the output together with the electric conductor. The two ends of casing containing iron cores are installed with end shields respectively, there is a hole at the center of the end shield (right side), and there is a step on the middle section extending outward, where it is installed with an insulating framework designed with conductors connecting with the wire winding. Install another conductor along the external ring of conductor, which connects with conducting wires for the transmission and output of electric energy. The section extending outward is equipped with a bearing stand where a bearing is installed to the end shield of the casing of the generator; the end shield of the casing is fixed on the casing through fasteners. The inner side of the end shield is designed with a bearing box containing shafts, the end shield is fixed on the iron core casing via fasteners. The other end (left side) of the iron core casing has an end shield fixed by fasteners, the inside of the end shield (left side) is designed with a bearing box containing shafts. The mid section of the end shield extending outward (right side) is equipped with a bearing stand where a bearing is installed, the bearing and the end shield of casing (left side) of the generator are fixed on the casing via fasteners so as to form a wire winding-based rotator. The outer bearing stand of the end shield extends a section, which is made into a shaft for the rotator. The iron core is installed with a magnetic rotator whose center is installed with a rotor shaft, on the two ends of the shaft, shafts are installed on different positions, the two shafts, iron core and shafts in the end shield form another rotator. The two rotators form a "Generator device with both driving units". The left section of the rotor shaft (left side) will travel through the central holes of the iron core end shield (left side) and the end shield of casing. The transmission mechanism and the rotator shall be installed on the top section of the inner rotator shaft, iron core end shield, both of which are concentric with the two shafts of the generator. The two transmission mechanisms are installed with speed change mechanisms respectively whose other end is connected with and fixed on the braking system, transmission mechanism, wheel hub, rotor wheel and fairwater so as to form the "Generator device with both driving units". The brake disc, generator, wheel hub, rotor wheel, fairwater and rotation gear are concentric. The impetus drives the rotor wheel to rotate which will transmit the kinetic energy to the shafts of the generator via transmission mechanism, speed change mechanisms and rotators. Due to the reverse angles of two driving wheels after making, the impetus coming from one direction will drive the two driving wheels to rotate in reverse directions. Through relevant system and structural devices, the two driving wheels transmit the kinetic energy to two shafts of the generator, where a reverse impetus will make the inner rotor and wire winding-based rotator in the two rotators of the "Generator device with both driving units" rotate (move) relatively in different directions respectively, enable the generator to rotate relatively, the higher rotation speed will increase the output efficiency of magnetic filed lines so as to save the energy, improve the efficiency and reduce resource consumption. The invention is not restricted by recourse kinds, specification or machine types. Based on different energy resources, purposes and utilization, the "Generator device with both driving units" (and other devices rotating in other two directions) is invented to meet with different energy resources, machine types, purposes and specifications.

The advantages of the invention are to utilize one energy and impetus in one direction as convenient power source so as to exert the latent energy of the generating equipment and improve the output efficiency.

### THE DRAWINGS

Fig 1: General installation drawing of Generator device with both driving units

Fig 2: Section drawing of assembly of Generator device with both driving units

Fig 3: Longitudinal section drawing of generator of Generator device with both driving units

Fig 4a: Longitudinal section drawing of end shield 1-4' of Generator device with both driving units

Fig 4b: End face drawing of end shield 1-4'

Fig 5a: Longitudinal section drawing of iron core casing 1-3, iron core 1-5, wire winding 1-6 assembly of Generator device with both driving units

Fig 5b: End face drawing of iron core casing 1-3, iron core 1-5, wire winding 1-6 assembly.

Fig 6a: End face drawing of end shield 1-4 of Generator device with both driving units

Fig 6b: Longitudinal section drawing of end shield 1-4

Fig 7: Longitudinal section drawing of inner rotator 1-12 of Generator device with both driving units

Fig 8: Longitudinal section drawing of casing 1-3 of generator of Generator device with both driving units

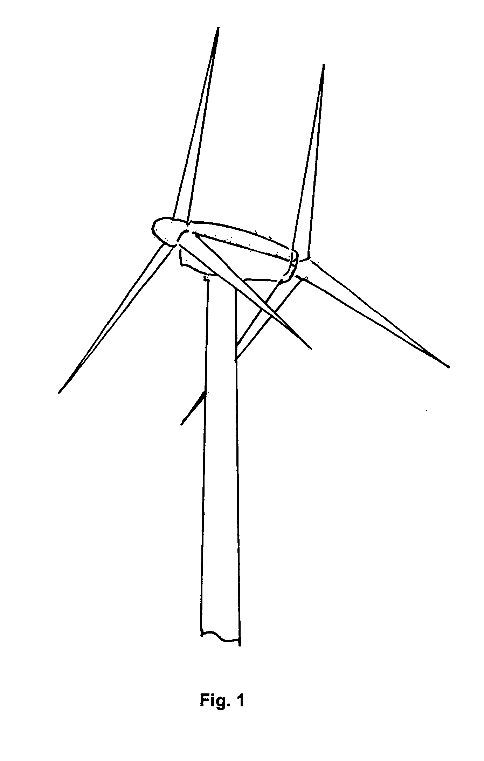

In Fig 1, the generator is installed with two rotators, 2, 2' are control devices, 3,3' are speed change mechanisms, 4,4' are transmission mechanisms, 5 is protective system, 6 is direction-adjustable system, 7,7' are rotating driving wheels, 8,8' are fairwaters, 9 is casing (cover), 10 is bracing frame, a is frame, b, b' connect with fairwater, c,c' are connecting devices, 1-1 is casing of generator, 1-2, 1-2' are end shields of casing of generator, 1-3 is iron core casing, 1-4, 1-4' are end shield shafts of iron core casing, 1-5 is wire winding iron core, 1-6 is wire winding, 1-7 is iron core-wire slot, 1-8 is inner rotator, 1-9 is insulating frame of conducting device, 1-10, 1-11 are conducting and transmitting part, 1-12 is inner rotator shaft, 1-13 is conducting transmission hole, 1-14 is input wire of the winding, 1-15 is output wire of the generator, 1-16, 1-16', 1-17, 1-17' are bearings, 1-18, 1-18', 1-19, 1-19' are fasteners, 1-20 is hole on the end shield shaft of iron core casing.

### DETAILED DESCRIPTION

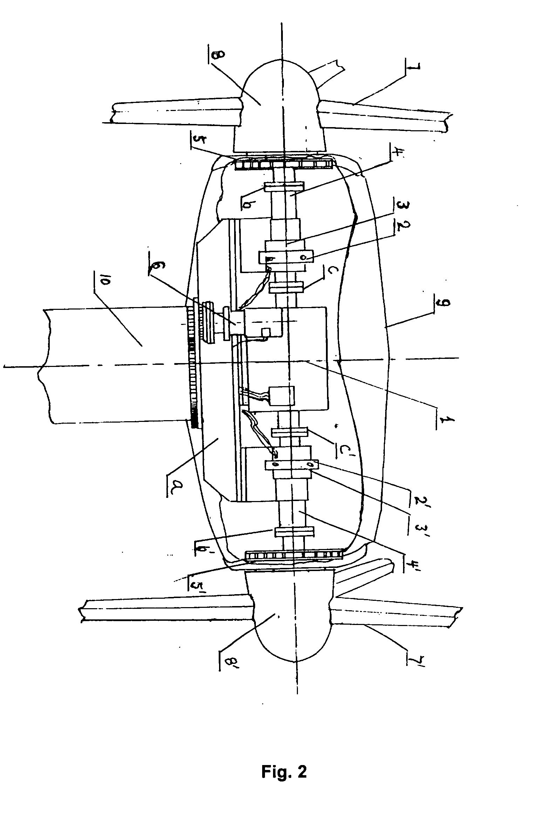

In Fig 1 and Fig 2, the bracing frame 10 of Generator device with both driving units is installed with frame a, the outside of the frame a is equipped with casing 9, the frame a is installed with generator 1, control system device, protective system 5, direction-adjustable system, veering motor 6; the shafts on both ends of generator 1 connect with transmission mechanism c, transmission mechanism c' via fasteners, the transmission mechanism c and transmission mechanism c' connect with speed change mechanism 3, speed adjusting device 3' respectively; the rotator is installed with hydraulic control, braking system devices 2, 2'; the outer ends of speed adjusting gear 3(right side) and speed change mechanism 3', through transmission mechanism 4, transmission mechanism 4', fitting b, b', connects with rotor wheel 7 and rotor wheel 7'. The middle position of rotator wheel 7 and rotator wheel 7' and fairwater 8, fairwater 8' form the "Generator device with both driving units".

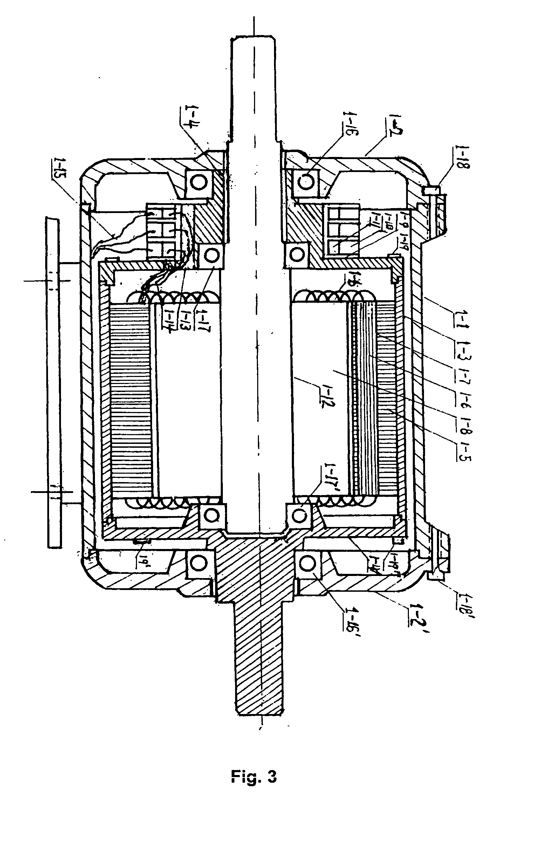

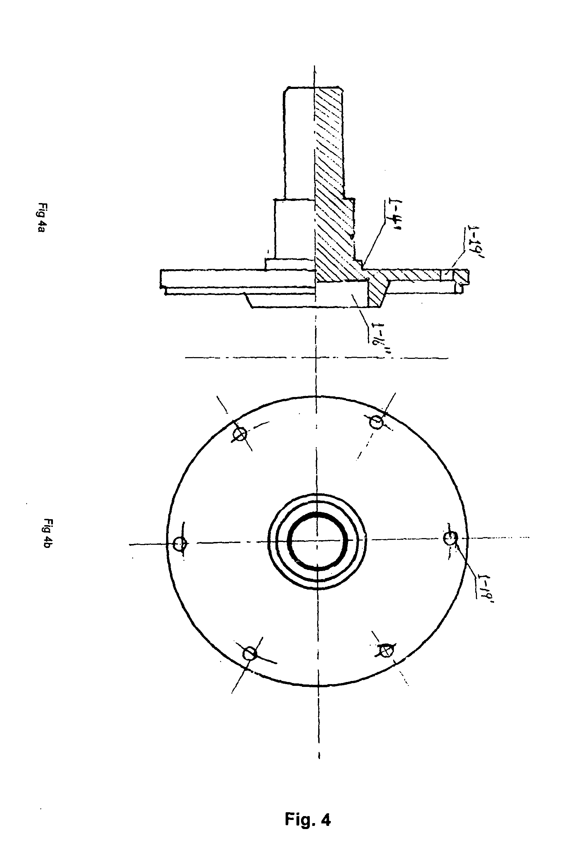

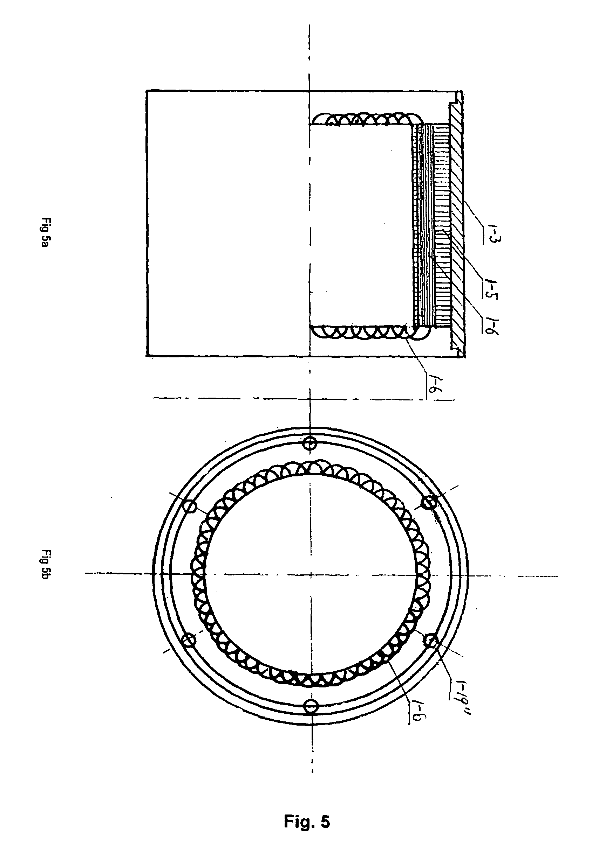

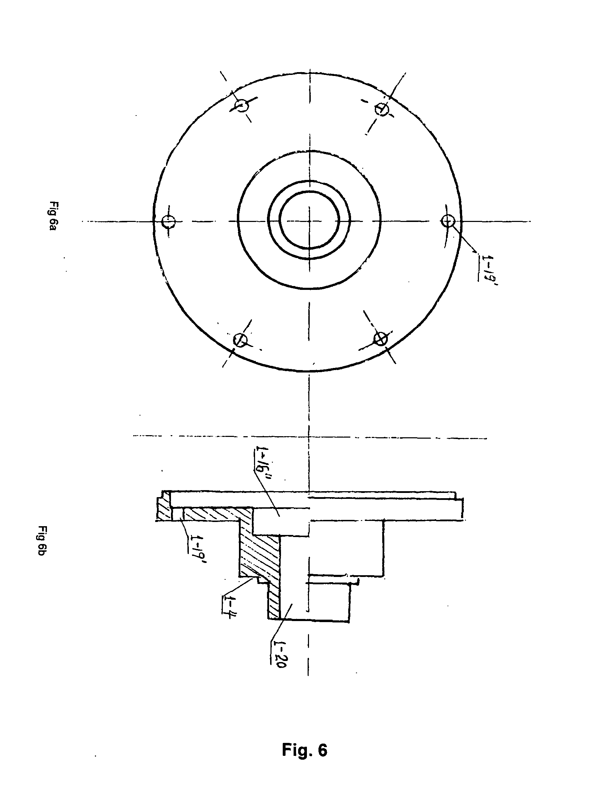

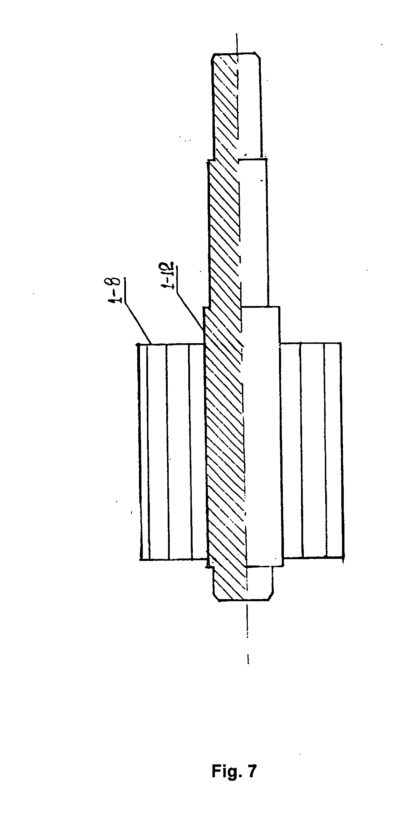

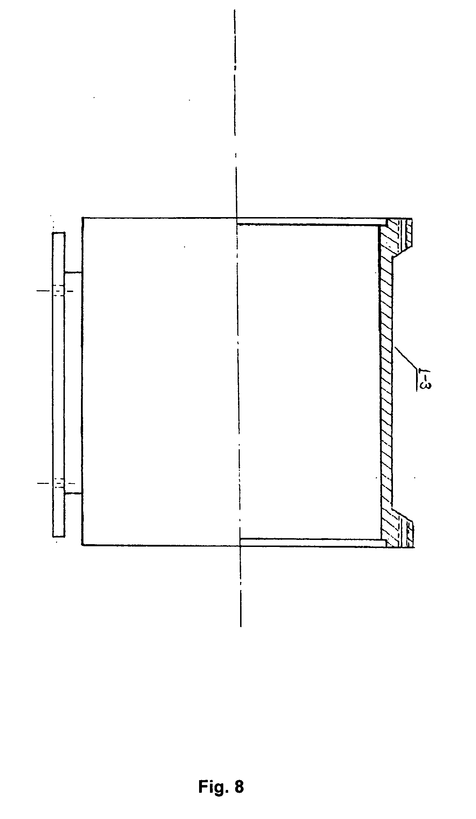

In Fig 1, refer to Fig 2, Fig 3, Fig 4, Fig 5, Fig 6, Fig 7 and Fig 8, the casing 1-1 of generator installed with iron core casing 1-3 containing wire winding iron core 1-5 in 1-3, there are slots 1-7 distributed along the inner ring of the iron core 1-5; the slot 1-7 is installed with coiling of the wire winding 1-6; the two ends of iron core casing 1-3 are installed on the end shield shaft 1-4, the end shield shaft 1-4' via fasteners 1-19, 1-19'; the end shield shaft 1-4 and the end shield shaft 1-4' are installed with bearing box 1-16" containing bearing 1-17 and bearing 1-17' along the inner middle position; the mid-section of the end shield 1-4(right side) extending outward is made into a step installed with insulating frame 1-9, a conductor 1-11 is installed along the outer ring of the frame 1-9, the output end 1-14 of wire winding 1-6 connects with different conductors 1-11 through the output hole 1-13 of end shield shaft 1-4, different conductors 1-10 connect with conductors 1-11 with varying phases along the outer ring, the conducting wires on the conductor will connect the electric output with varying phases from the generator to the agreed positions. The outer section of the end shield 1-4 is designed with a bearing stand installed with bearing 1-16, the ex-circle of bearing 1-16 installed to the end shield 1-2, then the end shield 1-2 is fixed on the casing 1-1 via fasteners, there is a hole 1-20 at the center of end shield shaft 1-4. The other end (left side) of iron core casing 1-3 is installed with a end shield shaft 1-4', the mid section of the end shield shaft 1-4' extending outward is designed with bearing stand installed with bearing 1-16', the section extending outward along the bearing stand is used for the assembly of shaft and transmission mechanism; the bearing 1-16" is assembled to the end shield 1-2' of the ex-circle and fixed on the casing 1-1 via fasteners so as to form a rotator. A rotator 1-8 made of magnetic conductor is installed inside the iron core 1-5, a rotator shaft 1-12 is installed in the middle of the rotators, the two ends of the rotator shaft are designed with bearing stand installed with bearing 1-17, the ex-circle of bearing 1-17 and the end shield shaft 1-4 are fixed on the iron core casing 1-3 via fasteners 1-19. The left end the shaft 1-12 travel through the central holes of the end shield shaft 1-4 and the end shield 1-2 of the casing to installed to the transmission mechanism 4. The other end of the rotator shaft 1-12 is designed with shaft and installed to the end shield shaft 1-4' and to the right end of the iron core casing 1-3 so as to form a rotator. The two rotators and relevant system devices form the "Generator device with both driving units".

## Claims

1. A generator device with both driving units, comprising:
a bracing frame assembled with a main frame where it is installed with the generator, a direction-adjustable system, a protective system, two hydraulic braking devices, a speed change mechanism, a transmission mechanism, a drive unit and a control system unit, all of which are assembled respectively through relevant fittings and connecting pieces under the requirements;
wherein the devices, fittings and casing form a two drives running generator with two rotators; the protective system, direction-adjustable system and control system device and two ends of the generator are designed respectively with transmission mechanism, speed change mechanism, hydraulic control, braking system and drive unit, relevant fittings, electric devices are connected and assembled through connecting pieces under sequences.

2. The generator device with doth driving units according to claim 1, wherein the driving wheel 7, driving wheel 7', fairwater 8, fairwater 8', transmission mechanism 4, transmission mechanism 4', generator 1 and the braking system are concentrical.

3. The generator device with doth driving units according to claim 1 or 2, wherein the two ends of the generator 1 are installed with transmission mechanism 4, transmission mechanism 4', speed change mechanism 3, speed change mechanism 3', hydraulic braking and control system 2, hydraulic braking and control system 2', rotor wheel 7, rotor wheel 7', fairwater 8 and fairwater 8'.

4. The generator device with doth driving units according to any one of claims 1 - 3, wherein the two ends of the generator and rotor wheel 7, rotor wheel 7', fairwater 8 and fairwater 8' are installed on the two terminals of the generator device with both driving units through relevant system connecting pieces.

5. The generator device with doth driving units according to any one of claims 1 - 4, wherein the generator device with both driving units is assembled with two driving rotor wheels, rotor wheel 7, rotor wheel 7', after making, the angles of rotor wheel 7 and rotor wheel 7' are reverse.

6. The generator device with doth driving units according to any one of claims 1 - 5, wherein the generator shall be installed with two rotating shafts, shaft 1-12, and shaft 1-4'.

7. The generator device with doth driving units according to any one of claims 1 - 6, wherein the two shafts, namely shaft 1-12, shaft 1-4' and shaft 1-12, shaft 1-4' are installed on the two ends of the generator extending outward and, concentrical with the generator.

8. The generator device with doth driving units according to any one of claims 1 - 7, wherein the wire winding 1-6, iron core casing 1-3, iron core 1-5, end shield draft 1-4, end shield shaft 1-4', casing 1-1, inner shaft 1-8, casing end shield 1-2, casing end shield 1-2' are concentrical and form a rotator equipped with wire winding.

9. The generator device with doth driving units according to any one of claims 1 - 8, wherein the rotator installed with driving shaft 1-12 and the rotator installed with end shield shaft 1-4' use one wire winding and one casing.

10. The generator device with doth driving units according to any one of claims 1 - 9, wherein the end shield shaft 1-4' extends a section, which is used as the shaft for the connection and assembly of generator end shield and generator as well as transmission mechanism of shafts and devices.
